# EUROPEAN PATENT SPECIFICATION

(11) **EP 2 456 722 B1**
(45) Date of publication and mention of the grant of the patent: **04.03.2015**
(21) Application number: 10736798.9
(22) Date of filing: 23.07.2010
(51) Int. Cl.: C02F 1/76, C02F 1/44, A61M 1/16, A61L 2/00, A61B 1/12, C02F 103/02

(54) **WATER DECONTAMINATION SYSTEM**
WASSERDEKONTAMINATIONSSYSTEM
SYSTÈME DE DÉCONTAMINATION DE L'EAU

(30) Priority: 23.07.2009 GB 0912865
(43) Date of publication of application: 30.05.2012
(73) Proprietor: Applied Chemistry Limited, Surbiton Surrey KT6 5NF (GB)
(72) Inventor: DYAS, Kevin, Slough Berkshire SL1 2WN (GB)
(74) Representative: Green, Mark Charles
(86) International application number: PCT/GB2010/051224
(87) International publication number: WO 2011/010166

(56) References cited:
- EP-A1- 1 695 940
- WO-A2-2005/065383
- CH-A- 126 829
- US-A- 4 255 246
- US-A- 4 810 388
- US-A- 5 645 727
- US-A1- 2003 085 239
- US-A1- 2003 141 202
- US-A1- 2007 264 355
- US-B2- 7 416 326
- "WFI-Qualität mit Membranverfahren", HAGER + ELSÄSSER , 9 March 2009 (2009-03-09), pages 1-18, XP002599995, Retrieved from the Internet: URL:http://www.new-lounges.de/downloads/18 _E1_2_WFI_Membranverfahren.pdf [retrieved on 2010-09-10]
- NYSTRAND R.: "Official recommendations for quality of fluids in dialysis -the need for standardisation", JOURNAL OF RENAL CARE, vol. 53, no. 2 8 May 2009 (2009-05-08), June 2009 (2009-06), pages 74-81, XP002600036, Retrieved from the Internet: URL:http://onlinelibrary.wiley.com/doi/10. 1111/j.1755-6686.2009.00091.x/pdf [retrieved on 2010-09-10]

## Description

### Field of Invention

The present invention relates to systems and apparatus for providing biologically pure water. In particular, the present invention relates to a process for providing biologically pure water for cleaning and rinsing contaminated endoscopes. More particularly, the present invention relates to the production of a biologically pure water stream which has no adverse effect on endoscopes, automatic endoscope reprocessors or human tissue and which involves less addition of chemicals to the system than is known in the art.

### Background of Invention

Endoscopy (meaning to *looking inside)* typically refers to a minimally invasive method of looking inside the human body for medical reasons using an instrument called an endoscope and has probably had an equivalent if not greater impact on the medicine as the invention of the X-ray due to its acceleration of minimally invasive diagnostic medical procedures. Its adoption has been widespread across the world over many years, and nearly all hospitals will now have a dedicated endoscopy unit undertaking hundreds of procedures every week, such as examination of the body cavities and organs within the cavities, laryngoscopy, bronchoscopy, and so on.

An endoscope can consist of
- a rigid or flexible tube
- a light delivery system to illuminate the organ or object under inspection. The light source is normally outside the body and the light is typically directed via an optical fibre system
- a lens system transmitting the image to the viewer from the fiberscope
- an additional channel to allow entry of medical instruments or manipulator

Endoscopes are extremely delicate and expensive pieces of equipment and as such are obviously non-disposable. It is therefore essential that endoscopes are thoroughly decontaminated and sanitised between each procedure in order to eliminate all risks of cross infection between patients. The effectiveness and reliability of the decontamination process is naturally of great concern to all as the most significant risk of any endoscopy procedure is post operation infection.

The effectiveness of endoscope decontamination remains a focus of attention across the medical community.

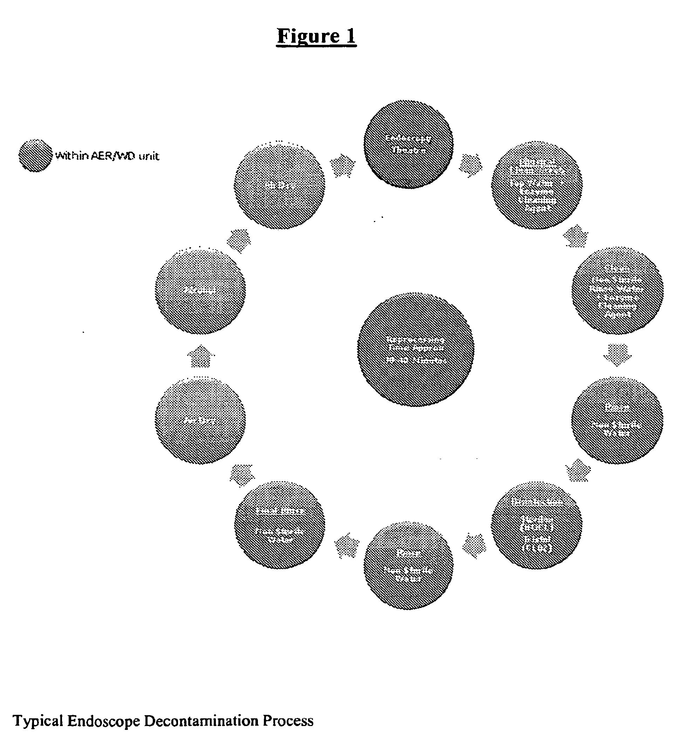

In a standard decontamination process, the used endoscope is brought down from the endoscopy theatre, possibly as one of a batch of endoscopes. The instrument is firstly given a physical clean and scrub, usually by hand, using tap water and an enzyme cleaning agent. This step is simply to remove surface soiling, such as blood. The endoscope is then more thoroughly cleaned, disinfected and rinsed to provide an instrument which can be sent back in a sterile form to the endoscopy theatre. Figure 1 attached shows a typical endoscope decontamination cycle. Specific equipment has been designed for the decontamination of endoscopes, known as Automatic Endoscope Reprocessors (AERs) or Water Disinfectors (WD). These "washing machines" take the form of a bath where the endoscope is not only submerged but numerous tubes are connected to the ports of the endoscope to permit thorough internal cleaning, disinfection and rinsing. The use of strong chemicals, particularly chlorine chemicals, as a part of the process requires the endoscope to undergo a complete flushing with rinse water to remove substantially all traces of enzymatic cleaning agent and disinfectant which could harm patients if still present. Each WD unit can hold one or multiple endoscopes for decontamination.

A typical hospital endoscopy unit would have multiple WD units to manage the constant flow of post operation endoscopes for decontamination. Due to their high cost, an endoscopy unit will not have a surplus supply of endoscopes so it is critical that the decontamination unit maintains an uninterrupted flow through and supply of units to meet the constant demand.

Currently WD units are the only form of endoscope decontamination equipment in use, but to date there are very few rinse water systems that continuously show consistent results. The current decontamination process shows a number of problems. All WD units rely on the constant supply of completely bacteria free water for the final rinse cycle and to date this has been impossible to achieve. As a result, there is significant opportunity for the growth of any bacteria present in the rinse water supply to cultivate within the endoscope after decontamination and subsequently infect patients. This would occur at a time when patients could be highly susceptible to (further) infection.

Various attempts to assess the level of risk have been attempted, however it is very difficult to identify in cases where post operation infection occurred if it was a direct result of bacteria within rinse water.

In addition, there is also a risk for severe contamination within the WD unit itself, either from bacteria within the rinse water or pathogens derived from contaminated endoscopes placed within the unit. In extreme cases it has been known for "back contamination" to occur where a WD contaminated the water supply itself.

Once discovered a contaminated WD unit has to be removed from service immediately and thoroughly disinfected. This downtime will have a severe impact on the processing and availability of endoscopes to the medical staff. It will also be necessary to re-process endoscopes from the contaminated WD unit which may otherwise place patients at risk.

In the absence of any clear data, it has been accepted that the significant benefits of endoscopy outweigh the risks and that the decontamination process is currently as "good as it can be". A Healthcare Technology Memorandum - HTM 2030 - issued by the United Kingdom Government in 1997 aimed to control the standards of endoscope decontamination and within this regular testing of rinse water is included. In the absence of any better systems, some presence of bacteria within rinse water is considered acceptable. However, it is clear that there is a scope for improvement in the reprocessing system. The ideal achievement would be the use of entirely bacteria free rinse water in order to lower the risk to public health.

Within the health and pharmaceutical industry water is generally accepted as biologically bacteria free if there is an absence of bacteria at a specified temperature. The most common used measure is the total viable count of colony forming units (cfu), and in the case of endoscopy rinse water the Healthcare Technical Memorandum HTM 2030 specifies a complete absence of bacteria in final rinse water, i.e. 0 cfu/100ml at 35°C.

In WD systems known in the art, inlet water to the WD systems is taken from either the mains water or the cold water service on site. The incoming water usually passes through a 25 micron filter to remove any large particulate matter before passing through a granular active carbon (GAC) unit to remove chlorine or chlorine dioxide that may be present in the water supply. The water is then softened in a base exchange unit before passing through a reverse osmosis unit (RO). At this point the water will be 98% free of all dissolved solids and free from 99.98% bacteria, since the RO membrane will not allow bacteria to pass through it. This is a log 4 reduction in bacterial levels, but in some situations much greater reduction is required. Whatever the level of bacteria after the RO membrane, bacteria will proliferate in the outlet water from the RO due to the fact that the pipework will not have a constant water flow through, every day, 24 hours a day. Most hospital endoscopy units will run from 9am to 5pm and from Monday to Friday. This means the water will stagnate for 75% of the time.

Tests show that typical water borne bacteria will multiply in the following conditions:
- Flow: Zero or near stagnant rates through pipework and tanks.
- Temperature: 20 - 60°C.
- Cleanliness: Where any foreign matter is present.

In order to demonstrate the lack of biological purity of a standard hospital rinse water supply, an aliquot of RO product water from the inlet pipe to a typical hospital WD system was placed on an Agar plate. The plate was placed in an incubator under sterile conditions for 48 hours, equivalent to a downtime in a WD unit over the weekend. It was found that colonies of bacteria, found in part to be Pseudomonas, were growing on the plate at a high enough level to fail the HTM 2030 bacteria test.

In order to try to improve water sterility, there has been a shift towards the use of oxidising biocides for high level disinfection of endoscopes. Active agents include Chlorine Dioxide, Peracetic Acid and Peroxide derivatives. Hypochlorous Acid, produced in situ by the electrolysis of salt is also used.

It has been found that oxidising biocides can cause damage to both the metal and plastic content of endoscopes. Generally the disinfection power of oxidising biocides also degenerates over time and subsequently they have a short shelf life. This makes their use expensive. In order to overcome this, oxidising biocides are marketed as 'single shot' products, and used for a single wash cycle as opposed to 'multishot' products that can hold their efficacy until the disinfection power is depleted to a specific strength. A multishot product can be used for multiple decontamination procedures over a number of days, which is said to require only a short contact time and to be a more cost effective solution than single shot product. Some machines use a single shot system, some a multishot system

'Multishot' oxidants normally have a secondary active oxidant which in most cases is at a higher concentration and acts as a precursor to the primary oxidant. For instance Tristel ® Multi-Shot incorporates an excess of Sodium Chlorite which is a mild oxidant and precursor to Chlorine Dioxide. Gigasept ® contains a 3% solution of Hydrogen Peroxide, a precursor to Peracetic Acid.

This approach lends itself well to the multishot technology. However it does not transfer well to 'single shot'. This is because the secondary oxidants are too weak to be effective in the short contact time available e.g. 5 to 10 minutes per disinfection cycle.

For a 'singleshot' disinfectant to be effective it must produce the desired bacterial kill rate using the primary active agent alone. The active agent in most cases will need to be a similar concentration as it is in the multishot process regime. This means the cost of using a single shot method is very high. With consistently high active agent concentrations there is also more potential for endoscope damage than perhaps seen with multishot methods due to corrosion and pitting.

Tristel have developed a generator which is claimed to supply bacteria free rinse water to the WD unit. The generator doses a chlorine dioxide solution into the supply water. However, a two part dosing system is required, comprising an activator and a base. Even though colour coded, the bottles can be wrongly connected to the generator. Furthermore, the generator generates chlorine gas which is unpleasant in the working environment.

Some applications use the Sterilox ® super oxidising water system which does produce biologically pure rinse water. The Sterilox system uses a machine which electrochemically generates hypochlorous acid solution from a brine solution. The machine includes a complicated system of electrolysis units. However there are water quality issues resulting from the salt content of the rinse water generated and the cost of purchase or lease is high.

Another problem which is found with some disinfection and rinse systems is that salts are deposited on the endoscope - these deposits have to be manually cleaned off with wipes.

As long as the rinse water fails to be completely bacteria free there is a doubt as to the cleanliness of the WD units, and thus the cleanliness of the endoscopes.

Systems adopting a high degree of filtration do not appear to give consistent results and require a high level of human interaction to keep TVC counts even to under 9 cfu/100ml at 35°C. Removal of bacteria by filtration has been limited to the make up water chain and not the rinse water ring main, as it has been found that filters reduce flow rates resulting in areas potentially at risk of biofilm formation. The periodic changing of filters also exposes the system to the threat of contamination from both the atmosphere and the practice of routine maintenance performed under non aseptic conditions. Biofilm supports colonisation by virulent strains of bacteria, which in turn cultivate even more biofilm which are then at very high risk of being present in the end use water. A colonised water supply and washer would require expensive and time consuming cleaning and delays, delays which are not wanted in a hospital environment.

Systems using hot water as a means of bacterial control suffer from frequent mechanical breakdowns and the persistence of bacteria such as *Pseudomondas* in the rinse water.

Furthermore, the temperature required to maintain control with particular reference to *Pseudomonas* is high (>90°C) and this has both cost and health and safety implications. In addition, although the heat will kill the bacteria, any biofilm on the instruments will not be removed. This can act as a matrix to further bacterial growth, increasing the rate of regrowth of bacterial colonies.

To date there are no rinse water treatment plants that can consistently produce biologically pure rinse water cost effectively and without damage to the endoscopes.

Current WD systems also require a multi-stage disinfection and rinse process, as is clearly seen in Figure 1. The process takes a long time to cycle the endoscope, which can lead to delays and the need for a large number of endoscopes to ensure cover for those in the decontamination process.

Elga Process Water has developed a system which aims to produce water for endoscope units. The system is designed to produce up to 30 litre/min of treated water, and can feed several AER units via a ring main distribution system. Inlet water is treated by a reverse osmosis membrane and then delivered into a 350 litre storage reservoir fitted with a 0.2um bacterial vent filter to prevent recontamination by airborne bacteria. From the reservoir the water is pumped through UV lamp, a final ultrafiltration membrane and into the distribution ring main to the various points of use. Unused water is returned to the storage tank via a spray ball, ensuring that all the reservoir's internal surfaces are continuously rinsed, preventing biofilm formation. The system can be modulated to meet peak demand and to give a constant pressure of 3bar in the ring main, then inhibit it to reduce noise, temperature build up and power consumption when demand is reduced. The Elga system has little potential to kill bacteria which may be in the water system, as there is no addition of chemicals such as HOCl which would disrupt the bacterial membrane. Low bacteria levels cannot be produced.

DE-A-19640841 (Fresenius) describes a method for producing ultra-pure medicinal solution. HOCl is produced by electrolytic means. Ozone, salt water, UV and a catalyst are required to produce the disinfecting solution. There is no recirculation of water in the system.

US-A-2003/0141202 (Nakamura assigned to Omega Co., Ltd) discloses an alkaline electrolyte solution which can be electrolyzed by an electrolyzer to provide electrolytic water as a purging and disinfecting water. The initial aqueous electrolyte solution comprises a mixture of an alkaline electrolyte and a neutral salt. The electrolytic water can be at neutral pH (pH 7) and above. The purging and disinfecting water is added to a water circulatory system and thus contaminants and noxious chemicals in the circulatory system are oxidation decomposed to thereby purge the circulating water, along with noxious microorganisms such as bacteria.

JP2007330950 (Nippon Rodosha) relates to a device for injecting NaOCl and HCl into water to create effective mixing. There is no recirculation of product, nor retention in either a single tank or multi-tank system to improve kill rate.

JP2001321778 (DKK Toa) describes a method for sterilizing water using HOCl and pH adjustment, via electrical conductivity measurement. No circulation of the water occurs.

The above system does not provide water which can be used to provide a constant stream of biologically pure water, nor a stream of water which can both clean, disinfect and rinse medical instruments in an AER.

There is accordingly a need to be able to supply a stream of biologically pure water.

There is a further need to supply a stream of biologically pure water to an endoscope reprocessor system which can be used to replace the disinfection stage, and thus reduce operating costs and reprocessing time.

There is a further need to produce a system for supplying biologically pure rinse water to an endoscope reprocessor system in a consistent, workable and cost-effective manner.

### Scope of the Invention

According to the present invention, it has been found that an effective system for producing biologically pure water can be operated wherein the primary control for minimising bacterial growth is a residual level of hypochlorous acid (HOCl) acting as a disinfectant, preferably together with a water velocity to prevent bacterial build up, both being applied to mains or supply water which is substantially bacteria free, preferably water which has passed through a Reverse Osmosis (RO) unit, known as RO product water. The water is kept at a constant flow. The system according to the present invention produces rinse water of biologically pure quality with consistent Total Viable Count (TVC) of less then 1, preferably 0 cfu/100ml at 35°C.

The present invention can also be used to overcome the high concentrations of active agents required in conventional reprocessor systems by adopting a high power disinfection programme at optimal strength which is made possible by the choice of active agent, HOCI, by controlling other chemical and physical properties of the disinfectant and by providing for the integration of disinfection and rinse water cycles, thus achieving a reduction in the reprocessor operating time and a reduction in cost, both in terms of chemical supply and endoscopy unit cost.

High power disinfection utilising the water stream according to the present invention overcomes the aggressiveness of conventional disinfectants such as Tristel to both to the environment, the WD unit and the endoscopes. Two consecutive disinfection/rinse cycles containing a low level disinfectant can achieve the same log reduction in bacteria levels in the same time duration as a high level single disinfection cycle followed by a rinse water cycle, without the need for multiple chemical additions, and using a simpler programme cycle.

Corrosion issues are overcome by counteracting the aggressive nature of the bulk water with respect to pH, chloride levels and oxidising potential by modulating other water characteristics such as alkalinity and concentration of alkali and alkali earth metal salts, in accordance with the Larson-Skold Index, Risner Index and other indices for controlling corrosion and precipitation within the water environment. This approach lends itself well to low level disinfection as water characteristics can be continuously monitored and automatically controlled. If required, corrosion inhibitors known in the art, such as boric acid, may be added to the rinse water.

Ideally, RO product water is used for rinse water cycles. However, this type of water is very aggressive to all metals containing Fe and or Cu. The pH of RO water is acidic, typically 5.5 to 6.0 for most water sources. This is due to the inability of RO membranes to remove the dissolved CO₂ content of the inlet water. RO product water also suffers from low ionic strength and low alkalinity. In one alternative to the invention, it will be seen and understood that the RO system may not be required for incoming pre-treatment.

According to the present invention, there is provided a method for the production of water which has a measured bacterial level of less than 1cfu/100ml at 35°C according to Claim 1. The present invention incorporates adjustment of these factors and optimises HOCI concentration in combination with consecutive low level disinfection/rinse cycles to achieve the desired kill rate of germs and addresses the sought TVC count.

The use of hypochlorous acid is effective against the well known problematic bacteria, such as but not limited to Mycobacteria, Pseudomonas, and Staphylococcus.

### Detailed Description

The invention will be described in more detail with reference to the accompanying figures, in which
Figure 1 is a schematic diagram of a conventional endoscope decontamination process.

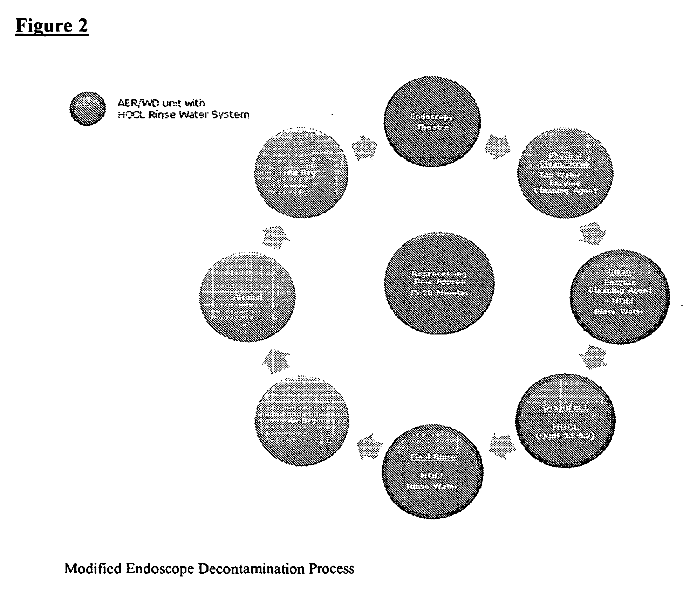

Figure 2 is a schematic diagram showing the modified decontamination process using the water supply according to the present invention
Figure 3 is a graph showing the relationship between pH and available chlorine present in a solution containing HOCl
Figure 4 is a graph showing the relationship between the percentage of available chlorine from HOCI and temperature
Figure 5 shows a bacterial kill curve of the present invention in comparison to a single dose system
Figure 6 is a diagrammatic representation of a complete system according to the present invention using a single tank ringmain system
Figure 7 is a diagrammatic representation of an alternative complete system according to the present invention which uses a twin tank ringmain system

According to one aspect of the present invention, a water treatment plant generates Reverse Osmosis (RO) quality water from the incoming mains water supply. The incoming cold water supply is metered and passes through sediment and activated carbon filters prior to being softened. The softened water stream passes through a RO plant. RO product water is then constantly recirculated in a ring main with the pressure regulated to provide a flow rate suitable for the WD / AER units and at a water velocity within pipework that will prevent the colonisation of internal surfaces by bacteria, thus restricting the growth of .biofilm. The velocity will depend on the gauge of the pipework, engineering of the pipework, and so on. Under normal operation there are no filters in the design which have been shown to restrict flow and encourage biofilm to form. Generally, a flow velocity of greater than or equal to 1 meter / second is preferred.

The continuous flow of water through the system is important in order to maintain a constant level of HOCl throughout the system. If the water was static, the levels of HOCl would vary throughout the system, and could be so low in some areas that colonies of bacteria would form. Bends and corners in pipework are key areas where the flow and velocity of water must be maintained in order to minimize bacterial growth. In some systems known in the prior art, there is no water flow, and thus no mixing of contaminated water with HOCL. Thus, the contact time of bacteria with HOCl is less, and this leads to colony growth.

In the discussion, water temperature is averaged at room temperature, which is generally held to be from 21 to 25°C, preferably 21°C.

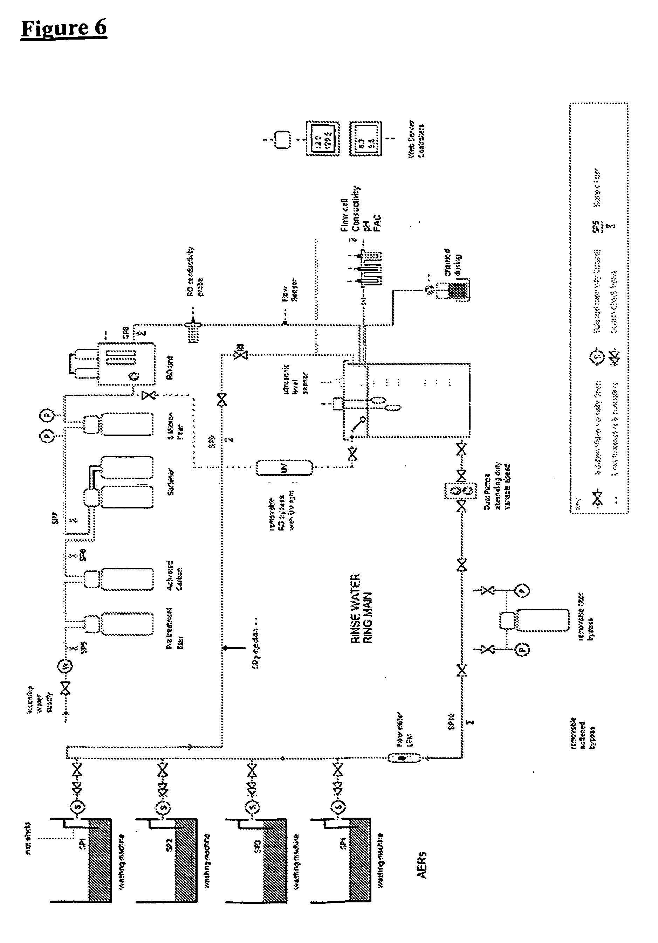

The ring main contains a holding tank that has two purposes. Firstly to provide a physical air gap between the rinse water system and the incoming water supply. This is important to safeguard the incoming supply from the possibility of back contamination from the WD / AER units. Secondly the holding tank can balance the demand for water against the size of the RO plant required. This system is shown in Figure 6.

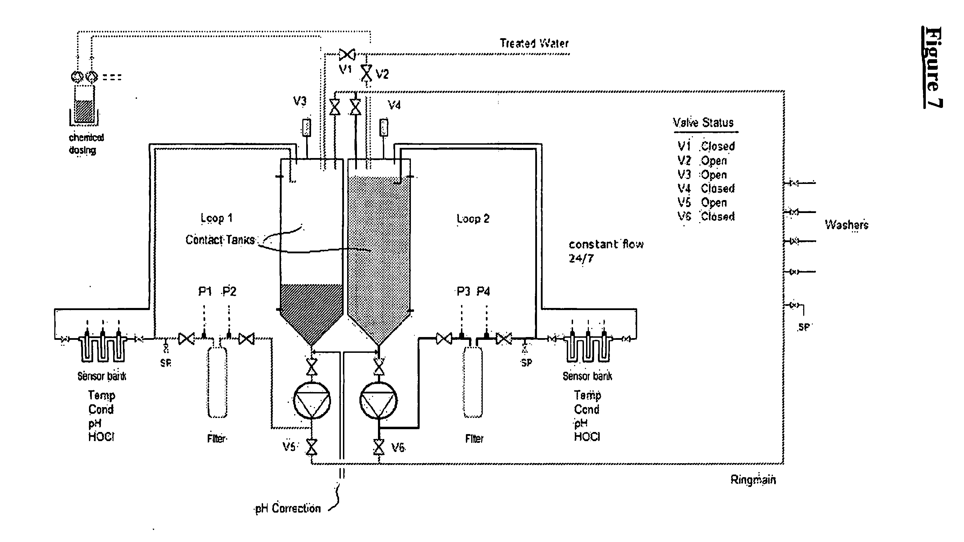

Figure 7 shows an alternative and preferred ringmain option which uses two holding tanks. In this system, twin tanks are connected to the ringmain pipework. Treated make up water is fed into the tank connected to Loop 1. Isolation valve V5 remains closed. Water recirculation remains constant around loop 1. When the tank is full, isolation valve V1 is closed. The chemical dosing system maintains a constant HOCl residual in Loop 1. Loop 1 has a specified minimum contact time for the HOCL to disinfect the enclosed water.

During this contact time no fresh make water is added to the loop and no system water is allowed into the ringmain. During this contact time period, water from Loop 2 tank is both circulated around the ringmain and around loop 2. No fresh make up water is allowed into Loop 2 whilst it is in use feeding the ringmain. The valve system means water from only one tank at a time is used.

The key advantage that this process has over the single tank ringmain system is that it guarantees a minimum contact time for the concentration of HOCl to kill any bacteria that may have entered into the tank with the fresh makeup water. The retention time is derived from the specified bacterial content of the make up water both in terms of the count and the species prevalent. The volume of the two tanks is governed by the demand for water put on the system by the washers, but will usually be in the region of 100 - 2000 litres in total, preferably 200 - 1000 litres in total split between two tanks.

In this model inline filtration is achieved in the two loops. There is a flow through the ringmain at all times. During periods of non-use, the source of the ringmain water will be the last tank/loop in use.

In a single tank holding system, such as shown in Figure 6, whilst water retention time may be sufficient to achieve the bacterial kill required during low water use, and particularly at night, when there may be no use, during periods of high use of water, water retention time may be insufficient to achieve the contact time required. The use of the second holding tank in the system according to Figure 7 achieves the required contact time.

Although a two tank and loop system will most likely be sufficient, a further plurality of tanks and loops can be envisaged, e.g. three or four.

In order to provide a very low bacterial count in terms of cfu, it would be preferred to carry out reverse osmosis treatment on the water prior to water entry into the dosing ringmain system. If a single tank and loop system is utilised, then pre-treatment of the incoming water by reverse osmosis is preferred. However, a plurality of tanks and loops and a longer water retention time can obviate the need for reverse osmosis treatment. This is preferred, as reverse osmosis equipment is expensive and can take a high degree of maintenance by staff. The pragmatic approach is to allow some level of bacteria into the ringmain system, but to use a longer retention time, utilising a plurality of holding tanks, to achieve the low bacterial level required.

Dilute Sodium Hypochlorite is dosed into the ring main, preferably into the holding tank, to generate a Hypochlorous Acid (HOCl) level of between 5 and 25 ppm, preferably between 5 and 15 ppm, most preferably 7ppm (measured as HOCl)., HOCl is a non ionic species which has very powerful disinfection properties. The pH of the water is preferably controlled by the injection of carbon dioxide gas into the ring main within the pH range of 5.5 to 6.2, preferably 5.8 to 6.2. This ensures an optimum level of the HOCI species in the water. (>95% of the free Chlorine residual)

Both physical and chemical parameters of the water treatment system can be monitored, most preferably online via signals sent from sensors to a local webserver. Parameters to be monitored include, but are not limited to, HOCI, FAC, pH, conductivity, tank chemical levels, rinse water tank level, flow rate and water usage. The webserver can automatically adjust flow, dosage of chemicals, temperature, etc. If levels reach a certain point, an audible and / or visual alarm can be triggered.

Biologically pure water is drawn off from the ring by the WD / AER units, usually through short flexible pipes fitted with double check valves to prevent back flow.

A removable filtration bypass is preferably inserted into the ring main for the commissioning and start up period to remove any debris or sediment created by the pipework and tank installation. The filter and filter housing can then be removed after around six months or when the system is both under microbiological control and there is no build up of sediment on the filter. The filter is preferably a I micron filter. An endotoxin filter can be used instead or as well in series in the pipe.

A removable bypass with an inline UV lamp can be connected to the system, the purpose of which is to provide redundancy or back up for the RO plant if used. UV light also provides a very high bacterial kill rate.

The biologically pure water produced according to the present invention can be used either as a complete combination disinfection and rinse system, or simply to replace the rinse stage of the reprocessing system, depending on the machine and programming of the machine.

### Methodology and Example

Hypochlorous acid is the term given to free chlorine dissolved in water when the species are predominantly in the covalent form of HOCl. Chlorine can be present as HOCL, Cl₂ or OCl⁻. In the form of HOCl, the power of free chlorine as a disinfectant is maximised. According to the invention, this is achieved by dosing a solution of alkaline metal or alkaline earth metal hypochlorite, preferably sodium hypochlorite into the RO product rinse water ring main and stabilising the pH at 5.0 to 6.2, preferably 5.8 to 6.2. The stability of pH is achieved by a combination of utilising the natural acidity of RO product water with Carbon Dioxide injection when required. In aqueous solution, hypochlorous acid partially dissociates into the anion hypochlorite OCl⁻

HOCl⇄ OCl⁻ + H⁺

Various studies have shown that HOCl inactivates cells and destroys proteins. It has been found in the present invention that a concentration of 7 mg/litre as FAC (free available chlorine) provides consistent sanitising quality, i.e. 100% of TVC results are 0 cfu/100ml at 35°C. This concentration is also easy to manage, cost effective and compatible with Washer Disinfector equipment (e.g. the bath/pipework metallurgy and plastic types).

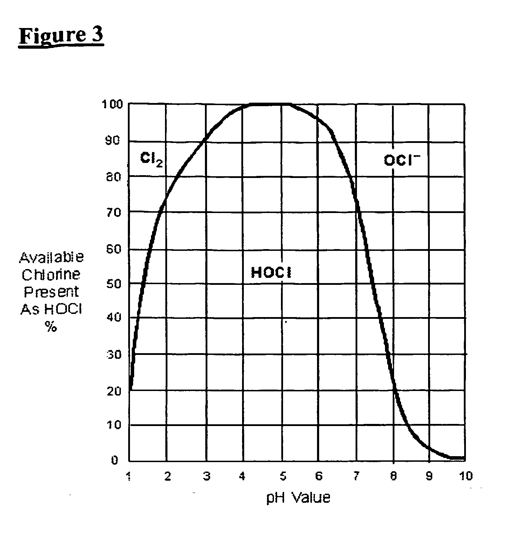

Figure 3 shows how available chlorine present as HOCl varies according to pH value, at a temperature of 25°C, compared to Cl₂ or OCl⁻.

By adhering to the preferred pH range 5.8 to 6.2, it has been found possible to achieve a greater than 95% conversion to HOCl at all times whilst limiting the amount of acid required. This pH range is advantageous as it also eliminates the production of FAC as dissolved chlorine which could gas off from the WD resulting in lost disinfection power and health and safety risks to technician operators.

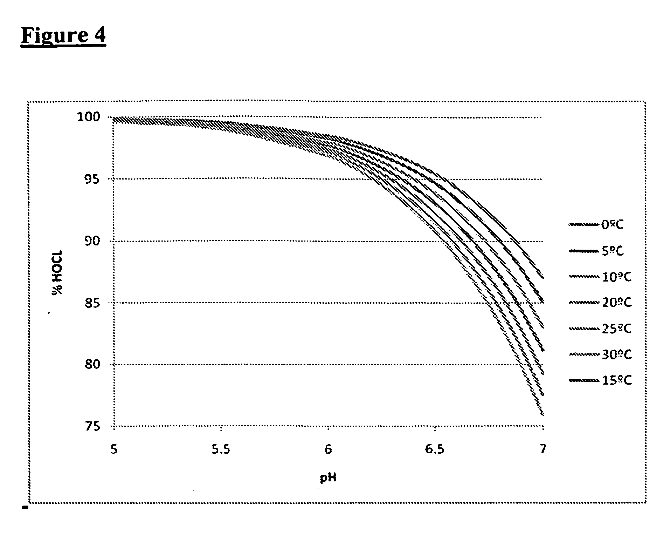

The temperature of the water in an AER / WD is reasonably stable at around 21 to 25°C. The % of HOCl present varies by very little with change in temperature. At pH 5.5 the % difference between temperatures of 0°C and 25°C is practically zero. At a pH of 6.5 the variance is around 2%. The variation is shown in Figure 4. From this perspective it has been found it is not necessary to control the temperature of the rinse water in the normal hospital environment.

The methodology of the present invention has a number of advantages over the prior art
- The water system complies with the requirements of HTM2030 by supplying water at a biologically bacteria free level - by which we mean having less than 1cfu/ 100ml water.
- Hypochlorous acid is a well known and proven disinfectant and is easy to obtain.
- The system is highly reliable
- There is minimised handling of chemicals on a day to day basis
- There are cost savings as disinfectant is produced in situ and on demand at any time, and on any day.
- There is no white residue left on the endoscopes or in the WD's. This is in contrast to hypochlorous acid produced from the electrolysis of brine. This is because there is a very low level of residual salt (NaCl) in the rinse water, compared to electrolysis systems such as Sterilox.
- The presence of hypochlorous acid in the ring main buffers the effect of back contamination from WD's, particularly older models.
- The methodology can be used to elevate chemical dosages to very high levels to sterilise a machine which is out of commission due to bacterial infection in the pipes.
- The technology is understandable by hospital technicians.
- The system provides water which can be used either simply as rinse water or as an integrated disinfection and rinse water supply.

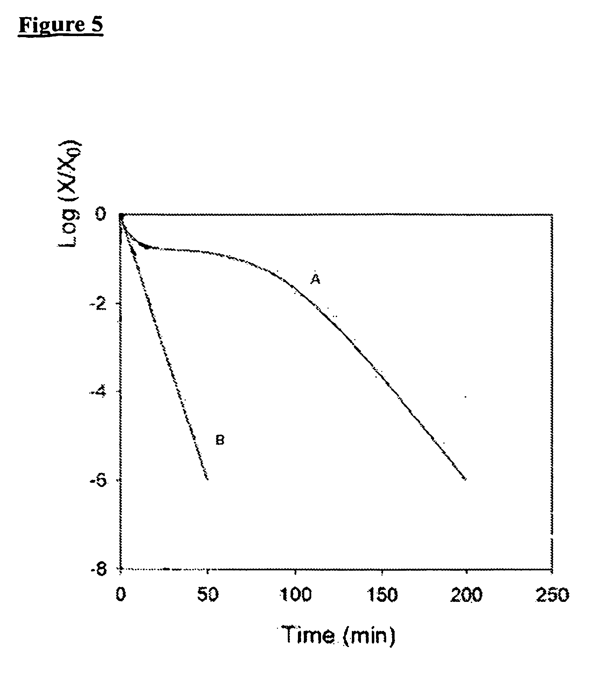

Figure 5 shows a kill curve showing log reduction in bacteria number against time. In a system of the prior art, as shown in curve A, there is a unit dose of product, and no circulating water flow. No parameters are measured or adjusted. The disinfectant material is used up over time, and this means there is a reduction in bacterial kill. Curve B shows the log reduction according to the process of the present invention, where there is constant monitoring of the concentration of HOCl, pH and temperature. The reduction is constant, and faster. The level of HOCl in the system is maintained. Retention of water through the ring main is also important in maintaining kill rate. The graph shows the advantages of a dynamic system according to the invention.

The chemical dosing regime and water flow system will now be described in more detail.

### Reagents

Sodium Hypochlorite: 10% stabilised solution of sodium hypochlorite is typically shipped in 25L containers. The pH of the solution is around pH 10, elevated with Sodium Hydroxide in order to provide a solution that can be stored without the possibility of chlorine gas escaping from the solution.

### Dosing Equipment

Standard chemical dosing tanks, preferably constructed from high density polyethylene (HDPE), diaphragm pumps and medium density polyethylene (MDPE) dosing tubes are used.

### Chemical Control

The HOCl residual level in the rinse water is continuously monitored by means of a HOCL specific amperometric probe inserted into the rinse water ring main. When linked to a control unit, the HOCl level is displayed. The controller parameters are preset to a minimum 14ppm and maximum 16ppm for example. The controller then instructs the dosing pump when to pump and when to stop pumping chemical, e.g. sodium hypochlorite. HOCl level is able to be maintained at a lower concentration than in systems of the prior art, in particular due to the retention of the water within the loop system.

### pH Control

The pH of the aqueous solution is kept in the range of 5.0 to 6.2, preferably 5.8 to 6.2. This ensures 95% of the active disinfecting species is HOCl, Hypochlorous Acid. This pH level is achieved by the injection of carbon dioxide gas into the recirculating loop. Carbon Dioxide reacts as follows:
(1)

   CO₂ (g) ⇔ CO₂ (l)
(2)

   CO₂ (I) + H₂O (l) ⇔ H₂CO₃ (l)
(3)

   H₂CO₃ + H₂O ⇔ H₃O⁺ + HCO₃⁻
(4)

   HCO₃⁻ + H₂O ⇔ H₃O⁺ + CO₃²⁻

The solubility of CO₂ in water is temperature dependant, as can be seen from the table below. However this is of little consequence here as CO₂ dosing is controlled by a pH probe in the recirculating loop.

| Temperature (°C) | 0 | 10 | 20 | 30 | 40 | 50 | 80 | 100 |
|---|---|---|---|---|---|---|---|---|
| Solubility (cm³ CO₂/g water) | 1.8 | 1.3 | 0.88 | 0.65 | 0.52 | 0.43 | 0.29 | 0.26 |

Carbon Dioxide is used to control pH as opposed to an acid for a number of reasons:
The alkalinity of the rinse water prior to pH correction is very low at around 20 mg/L as CaCO₃, This means that a weak acid will work best and provide a tighter control range. Carbonic acid also reacts faster than mineral acids ensuring a more consistent pH.
Carbon Dioxide handling is safe compared with acid from both a dosing/injection perspective and with respect to COSHH regulations (Control of Substances Hazardous to Health).

It will also be appreciated that hospitals are used to handling CO₂, and that the CO₂ injection system requires less maintenance than an acid chemical dosing system.

### Rinse Water Flow Rate

The rinse water flow rate has to be kept consistent in order to prevent bacterial growth. A drop in system pressure that may not have a noticeable effect on washer cycle times may be significant enough to generate a drop in water velocity close to the internal walls of the pipework which would promote biofilm growth. This would be noticeable from a gradual decline in biological rinse water quality over a period of a few weeks. To safe guard against this a visual flow meter is installed in the rinse water circuit and a flow sensor linked to a webserver will alert if there is any deviation from the accepted flow range. Flow parameters are specific to individual installations and will depend on pipe diameter, material, tank volume and water usage. Generally a flow velocity greater than or equal to 1 meter /second is preferred.

The flow rate (litres/minute) is set to ensure that the water velocity (metres/second) is above 1m/s in pipework straights and to ensure a maximum tank retention time of 20 minutes.

### Other parameters

Other parameters are continuously monitored which assist in diagnosis of faults with rinse water quality. These include heat and electrical conductivity of both ring main water and RO product water and also the volume of stored tank water in the system.

An optional component which can be added to the system is surfactant, e.g. polysorbate ® 60 which modifies the properties of the product water when coming into contact with pipework, AER /WD and endoscopes. This has the further benefit of
(a) further facilitating the removal and prevention of bio-film from the process pipework, and WD/AER machines
(b) preventing any bacteria and endotoxins present in the WD/AER adhering to the endoscope during processing
(c) acting as a rinse aid for faster drying of endoscopes which prohibits their recontamination by bacteria
(d) preventing any chemical residues forming on the surface of the endoscope.

### Data Recording, Visibility and Alarms

All parameters that are continuously monitored are transmitted via a webserver in real time and are visible both graphically and in table format over the internet from any pc. All out-of-specification readings trigger an email and or SMS message to a list of responsible persons. There is also a visual alarm located in the AER / WD room which alerts to poor rinse water quality. Further manual checks/tests that are carried out on the rinse water are recorded in the online water quality logbook.

The system can be operated by a computer linked to the monitors to achieve correct chemical dosage and rinse water flow.

Because water quality is actively monitored and maintained to specific parameters within the recirculating ring the bacteria levels can be reliably pre-determined. This is a advantage which overcomes the reliance on retrospective weekly water testing (a 3 day cultivation period at 35°C). The extended time delay in the prior art prevents any remedial action being taken, with the result that endoscopes are continually at risk of being processed in water that may contain high levels of bacteria.

### Compatibility of Aqueous Solution with AER's and Endoscopes

There was no evidence of any adverse effects to AER's or endoscopes. The level of residual hypochlorous acid is too low to cause any damage to any of the common materials used in the manufacture of scopes or baths and the pH is within a comfortable range.

The HOCl breaks down rapidly to non hazardous substances, i.e. oxygen and chloride ions, so there is little danger in case of spillage to the environment. The use of HOCl is safe in water, as no dioxins are produced. No special handling techniques are required, as the hypochlorous solution is harmless to unprotected skin. No venting of chlorine gas is required or even necessary.

### System Maintenance

Routine maintenance requirements are very low. Maintenance is generally restricted to the pre treatment plant, e.g., routine softener and RO plant tasks and periodic calibration of probes and control checks. There is no need to routinely 'break' the rinse water ring main for any reason. Addition of chemical to the chemical dosing tank needs to be carried out approximately every six months at normal hospital usage.

### Remedial Action, breakdowns

A high level of redundancy is built into the system to minimise downtime whilst still maintaining water quality. This includes substitution of controllers reverting to timed chemical dosing.

### Decontamination Process Cycle

Endoscopes are brought down from the endoscopy theatre. They are then given a scrub, using tap water and an enzymatic cleaning agent. The scrubbing removes any surface traces of bodily fluids such as blood. The endoscope is then connected to the Automatic Endoscope Reprocessor Unit by a series of pipes.

In the first cleaning cycle, water produced according to the present invention is piped into the AER and thus into the endoscope, along with a further dose of enzymatic cleaning agent to provide a secondary clean.

The AER then moves to the disinfection part of the cycle. Biologically pure water containing HOCl produced according to the present invention is cycled through the endoscope, and acts as a disinfectant to kill bacteria on the endoscope.

The next stage is the rinse cycle. The disinfectant water is drained from the AER, and a rinse cycle then begins. This uses the same water supply, although possibly the HOCl level can be varied. However, the technology is the same - just the dosing of HOCl will vary.

The rinse water is then drained off, leaving a biologically clean instrument. The endoscope is then dried in a warm air stream.

The next stage is a final wash in an alcohol solution.

Finally, the endoscope is again dried with warm air; removed from the machine, packed into a sterile pack and returned to the endoscopy theatre.

The whole process takes about 20 - 30 minutes. In comparison, the standard multi stage disinfection and rinse process as show in Figure 1 takes about 30 - 40 minutes. The system may permit increased productivity within the endoscope reprocessing unit, reducing staffing costs and negating the need to invest in additional AER units.

### Other Uses

Whilst the present invention is particularly directed towards the production of water for use with an endoscope decontamination system, it will be realised that the quality of the water can be used in other processes, particularly in the medical, veterinary and dentistry fields. For example, the rinse water plant may be used to generate bacteria free rinse water for renal dialysis. For this procedure, the twin tank arrangement is used and the HOCL residual is completely removed prior to water exiting the ringmain. This may be achieved by activation of UV light in the ringmain and/or loop in operation or a shot dose of a reducing agent such as sodium thiosulphate into the ringmain.

## Claims

1. A method for the production of water which has a measured bacterial level of less than 1 cfu/100ml at 35°C which comprises passing water from a mains supply containing bacteria into a continuously circulating ring system and then adding to the water in the ring system an alkaline metal or alkaline earth metal salt of hypochlorous acid and maintaining the supplied water containing bacteria in contact with HOCl for a sufficient time to reduce the bacterial level to less than 1 cfu/100ml at 35°C,
**characterised in that** the water in the ring system is maintained at a pH in the range of 5.0 to 6.2.

2. A method as claimed in Claim 1 wherein the water is pre-treated by passing through a reverse osmosis membrane prior to entry and circulation in the ring main system.

3. A method as claimed in any preceding claim wherein the system includes one or a plurality of contact tanks linked to the water ring system which provide sufficient contact time of HOCI with the bacteria containing water to reduce bacterial level to less than 1 cfu/100ml at 35°C.

4. A method as claimed in Claim 3 wherein there are provided two contact tanks in the water ring system.

5. A method as claimed in any preceding claim wherein the water is circulated at a velocity of greater than or equal to 1.0 m/s as defined herein.

6. A method as claimed in any preceding claim wherein the water temperature is maintained at a temperature of 25°C or above.

7. A method as claimed in Claim 1 wherein a surfactant is added to the water.

## Patentansprüche

1. Verfahren zur Herstellung von Wasser, das bei 35 °C eine gemessene Bakterienkonzentration von weniger als 1 cfu/100 ml aufweist, umfassend das Leiten von Wasser von einer Bakterien enthaltenden Hauptwasserleitung in ein kontinuierlich umgewälztes Ringsystem und dann das Zusetzen eines Alkalimetall- oder Alkali-Erdmetallsalzes von Hypochlorsäure zu dem Wasser im Ringsystem und das Halten des zugeführten, Bakterien enthaltenden Wassers in Kontakt mit HOCl über eine ausreichende Zeit, um die Bakterienkonzentration auf weniger als 1 cfu/100 ml bei 35 °C zu reduzieren,
**dadurch gekennzeichnet, dass** das Wasser in dem Ringsystem bei einem pH-Wert im Bereich von 5,0 bis 6,2 gehalten wird.

2. Verfahren nach Anspruch 1, wobei das Wasser vorbehandelt wird, indem es vor dem Eintritt und dem Umwälzen in dem Ringhauptsystem durch eine UmkehrosmoseMembran geleitet wird.

3. Verfahren nach einem der vorhergehenden Ansprüche, wobei das System einen oder mehrere mit dem Wasserringsystem verbundene Kontakttanks beinhaltet, die ausreichende Kontaktzeit von HOCl mit dem Bakterien enthaltenden Wasser bereitstellen, um die Bakterienkonzentration auf weniger als 1 cfu/100 ml bei 35 °C zu reduzieren.

4. Verfahren nach Anspruch 3, wobei in dem Wasserringsystem zwei Kontakttanks bereitgestellt sind.

5. Verfahren nach einem der vorhergehenden Ansprüche, wobei das Wasser mit einer Geschwindigkeit von 1,0 m/s oder mehr wie hierin definiert umgewälzt wird.

6. Verfahren nach einem der vorhergehenden Ansprüche, wobei die Wassertemperatur bei einer Temperatur von 25 °C oder darüber gehalten wird.

7. Verfahren nach Anspruch 1, wobei dem Wasser ein Tensid zugesetzt wird.

## Revendications

1. Procédé de production d'eau qui contient un niveau bactérien mesuré de moins de 1 cfu/100 ml à 35 °C, qui consiste à faire passer de l'eau provenant d'une alimentation par le réseau contenant des bactéries dans un système annulaire à circulation continue, puis à ajouter à l'eau dans le système annulaire un sel de métal alcalin ou de métal alcalinoterreux d'acide hypochloreux et à conserver l'eau alimentée contenant des bactéries en contact avec HOCl pendant un temps suffisant pour réduire le niveau bactérien à moins de 1 cfu/100 ml à 35 °C,
**caractérisé en ce que** l'eau dans le système annulaire est conservée à un pH se situant dans la plage de 5,0 à 6,2.

2. Procédé selon la revendication 1 dans lequel l'eau est prétraitée par passage à travers une membrane d'osmose inverse avant d'entrer et de circuler dans le système annulaire d'alimentation par le réseau.

3. Procédé selon l'une quelconque des revendications précédentes, dans lequel le système comprend un ou une pluralité de réservoirs de contact raccordés au système annulaire d'eau qui assurent un temps de contact suffisant de HOCl avec l'eau contenant les bactéries pour réduire le niveau bactérien à moins de 1 cfu/100 ml à 35 °C.

4. Procédé selon la revendication 3, dans lequel il est prévu deux réservoirs de contact dans le système annulaire d'eau.

5. Procédé selon l'une quelconque des revendications précédentes, dans lequel l'eau circule à une vitesse supérieure ou égale à 1,0 m/s, tel que défini dans la description.

6. Procédé selon l'une quelconque des revendications précédentes, dans lequel la température de l'eau est maintenue à une température égale ou supérieure à 25 °C.

7. Procédé selon la revendication 1, dans lequel un tensioactif est ajouté à l'eau.
